# EUROPÄISCHE PATENTANMELDUNG

(11) **EP 4 269 371 A1**
(43) Veröffentlichungstag der Anmeldung: **01.11.2023**
(21) Anmeldenummer: 23167089.4
(22) Anmeldetag: 06.04.2023
(51) Int. Cl.: C04B 28/04, C04B 14/06

(54) **BEWEHRTER HOCHLEISTUNGSAEROGELBETON**

(30) Priorität: 07.04.2022 DE 102022108444
(71) Anmelder: Universität Duisburg-Essen, 45141 Essen (DE)
(72) Erfinder: Welsch, Dr. Torsten, 53773 Hennef (DE); Heidrich, Till, 50735 Köln (DE); Fickler, Silvia, 45881 Gelsenkirchen (DE); Schnellenbach-Held, Prof. Dr. Martina, 45134 Essen (DE)
(74) Vertreter: Michalski Hüttermann & Partner Patentanwälte mbB

(57) **Zusammenfassung**

Die Erfindung betrifft eine Aerogelbetonmischung, die Faserabschnitte enthält, ein Verfahren zur Herstellung eines Aerogelbetons, einen ausgehärteten Aerogelbeton, sowie Bauteile daraus.

## Beschreibung

Die Erfindung betrifft eine Aerogelbetonmischung, die Faserabschnitte enthält, ein Verfahren zur Herstellung eines Aerogelbetons, einen ausgehärteten Aerogelbeton und Bauteile daraus.

Aerogelbeton an sich ist schon länger bekannt (beispielsweise DE102019122616A1 oder WO2016202718A1). Bisher war es schwierig, Aerogelbeton beispielsweise mit stabförmigen Bewehrungselementen aus Betonstahl oder glasfaserverstärktem Kunststoff zu bewehren, da sich im Aerogelbetonbauteil infolge behinderter Schwinddehnungen Zwangsspannungen gebildet haben, die beispielsweise zu Rissen und anderen Defekten geführt haben.

Die Aufgabe der vorliegenden Erfindung besteht daher darin, diese Nachteile zu überwinden und eine Technologie bereitzustellen, mit der ein Aerogelbeton ohne Defekte wie materialbedingter Rissbildung und Vorschädigung hergestellt und auch bewehrt werden kann werden kann.

In einer ersten Ausführungsform wird die der Erfindung zu Grunde liegende Aufgabe durch eine Aerogelbetonmischung gelöst, enthaltend
a. 10 bis 85 kg/m³ Aerogelgranulat,
b. 100 bis 800 kg/m³ wenigstens eines anorganischen Bindemittels,
c. 10 bis 150 kg/m³ Silica bezogen auf den Feststoffgehalt,
d. 1 bis 45 kg/m³ wenigstens eines Fließmittels,
e. 0,2 bis 9 kg/m³ wenigstens eines Stabilisierers,
f. 10 bis 1200 kg/m³ wenigstens eines Zusatz- beziehungsweise Zementersatzstoffes, und
g. 0,5 bis 50 kg/m³ Faserabschnitte.

Die genannten Anteile sind im Sinne einer Stoffraumrechnung als massebezogene Anteile je Kubikmeter Betonmischung dem Fachmann auf dem Gebiet der Betonherstellung und Betonverarbeitung im Detail bekannt und können auf einfache Weise eingestellt werden.

Weiterhin weist die Aerogelbetonmischung bevorzugt Wasser auf. Der Gehalt an Wasser kann insbesondere abhängig sein von Art und Menge an verwendetem Bindemittel als auch von Art und Menge der Zusatzstoffe. Beispielsweise kann Wasser in einer Menge vorliegen, dass das Verhältnis von Wasser zu Bindemittelkomponenten, also Bindemittel und Zusatz-beziehungsweise Zementersatzstoffe, in einem Bereich liegt von 0,10 bis 0,8, beispielsweise 0,15 bis 0,50, etwa 0,2 bis 0,35, bezogen auf die jeweiligen Massenanteile.

Durch die Faserabschnitte, die auch schlicht als Fasern bezeichnet werden können, wird Aerogelbeton, der auch bewehrt sein kann, bei der Aushärtung mechanisch verstärkt. Zudem werden die Spannungen im Material besser verteilt. Risse und andere durch Spannungen im Material hervorgerufene Defekte können so viel besser vermieden werden.

Insbesondere kann es von Vorteil sein, dass die Aerogelbetonmischung eine Bewehrung, insbesondere aus Stahl oder glasfaserverstärktem Kunststoff, aufweist. Es hat sich in überraschender Weise herausgestellt, dass das Schwinden von Beton durch Fasern vermieden oder zumindest deutlich reduziert werden kann, insbesondere wobei die Fasern in einer Länge von ≤ 3 mm und/oder mit geringen Fasergehalten von bis zu 0,5 Vol.-%, beispielsweise bis zu 0,3 Vol.-%, etwa von bis zu 0,24 Vol.-%, vorliegen. Derartige Effekte haben insbesondere bei bewehrtem Beton zu Rissen geführt, was erfindungsgemäß durch die Kombination von Bewehrung und Fasern jedoch signifikant reduziert werden kann.

Die Aerogelbetonmischung kann auch weitere Bestandteile enthalten.

### Verfahren

In einer weiteren Ausführungsform wird die der Erfindung zu Grunde liegende Aufgabe durch ein Verfahren zur Herstellung eines Aerogelbetons mit einer erfindungsgemäßen Aerogelbetonmischung gelöst, dadurch gekennzeichnet, dass man zunächst Bindemittel, Faserabschnitte, Aerogel und Zusatz- beziehungsweise Zementersatzstoff vermischt, dann ein Wasser-Fließmittel-Gemisch und den Stabilisierer hinzufügt, in einer Mischpause eine wässrige Silicasuspension, nach erneutem Mischen das verbleibende Wasser hinzugibt und weiter mischt, und anschließend die Mischung in eine Schalung füllt, die unter Umständen mit Bewehrung versehen ist.

### Ausgehärteter Aerogelbeton

In einer weiteren Ausführungsform wird die der Erfindung zu Grunde liegende Aufgabe durch einen ausgehärteten Aerogelbeton enthaltend
a. optional eine Bewehrung,
b. 10 bis 85 kg/m³ Aerogelgranulat,
c. 100 bis 800 kg/m³ wenigstens eines anorganischen Bindemittels,
d. 10 bis 150 kg/m³ Silica,
e. 1 bis 45 kg/m³ wenigstens eines Fließmittels,
g. 10 bis 1200 kg/m³ wenigstens eines Zusatz- beziehungsweise Zementersatzstoffes, und
h. 0,5 bis 50 kg/m³ Faserabschnitte.
gelöst.

Der Aerogelbeton kann vorzugsweise bewehrt sein.

Der ausgehärtete Aerogelbeton kann auch Stabilisierer enthalten.

Die Erstarrung von Aerogelbetonen beginnt nach wenigen Minuten, die Hydratation ist innerhalb weniger Stunden beziehungsweise Tage abgeschlossen und der Festbeton zeigt nur ein geringes Wasseraufnahmevermögen. Aerogele sind nicht toxisch, nicht kanzerogen und wurden vom Umweltbundesamt der Bundesrepublik Deutschland als "weitgehend ungefährliches Material" eingeordnet. Aerogelbeton ist ein hervorragender Brandschutzwerkstoff und weist eine hohe Schallabsorption auf.

Der ausgehärtete Aerogelbeton kann vorzugsweise durch das erfindungsgemäße Verfahren erhalten werden.

Der ausgehärtete Aerogelbeton ist ferner vorzugsweise aus der vorbeschriebenen Aerogelbetonmischung ausgebildet. Dabei ist dem Fachmann klar, dass die genannten Komponenten zumindest zum Teil in bei der Hydratation erfolgten reagierten Form vorliegen. Beispielsweise kann das Bindemittel zu CSH-Phasen reagiert sein.

Vorzugsweise liegt die Wärmeleitfähigkeit des Aerogelbetons in einem Bereich von 0,05 bis 0,5 W/mK.

Vorzugsweise liegt die Druckfestigkeit des ausgehärteten Aerogelbetons in einem Bereich von 1 bis 60 MPa, besonders bevorzugt 10 bis 30 MPa.

Die Schwinddehnung liegt vorzugsweise in einem Bereich von 0,1 bis 5 Promille, besonders bevorzugt 0,3 bis 3 Promille. Es wird im vorliegenden Fall von Gesamt-Schwinddehnung gesprochen, die auch das Frühschwinden (plastisches Schwinden), das autogene Schwinden und das Trocknungsschwinden umfasst. Im Stand der Technik sind zwar Aerogelbetone bekannt, für die auch eine recht geringe Schwinddehnung aufgeführt wird. Hierbei wurde allerdings nur das Trocknungsschwinden betrachtet.

### Bauelement

In einer weiteren Ausführungsform wird die der Erfindung zu Grunde liegende Aufgabe durch ein Bauelement gelöst, das den erfindungsgemäßen Aerogelbeton enthält. Das Bauelement kann vorzugsweise ein schwindsensibles Bauelement oder ein bewehrtes Bauelement sein. Das Ziel bei Letzterem ist vor allem die Vermeidung von Schwindrissbildung.

Bauelemente aus erfindungsgemäßem Aerogelbeton zeichnen sich im Vergleich zu den bislang bekannten Aerogelbetonen überraschender Weise durch eine sehr kurze Erhärtungsdauer und eine sehr schnelle Festigkeitsentwicklung aus. Bereits nach 15-30 Minuten ist ein Erstarren des Frischbetons zu beobachten, und nach etwa 26 Stunden ist der Hydratationsprozess nahezu vollständig abgeschlossen, so dass zu diesem Zeitpunkt die Druckfestigkeit schon etwa 80% der Druckfestigkeit nach 28 Tagen beträgt.

Die erfindungsgemäßen Bauelemente können beispielsweise Wandelemente, Deckenelemente Mauersteine oder auch Brandschutzplatten sein. Diese weisen eine hohe Tragfähigkeit und eine geringe Wärmeleitfähigkeit auf. Sie ermöglichen damit die Herstellung einschaliger Außenwandkonstruktionen von mehrgeschossigen Wohn- und Nichtwohngebäuden ohne zusätzliche Wärmedämmung, wie sie beispielsweise bei Wärmedämmverbundsystemen (WDVS) oder zweischaligem Mauerwerk mit Kerndämmung erforderlich ist. Zusätzliche Schalen sind jedoch gleichbedeutend mit einem größeren Herstellungsaufwand und damit höheren Kosten. Hinzu kommen konstruktive Problemstellungen (Brandschutz bei EPS- und XPS-Dämmstoffen, Befestigungstechnik, Fassadenveralgung).

Bauelemente aus Aerogelbeton weisen, ähnlich wie Konstruktionselemente aus Leicht- oder Normalbeton, eine im Verhältnis zur Rohdichte hohe Druckfestigkeit auf, aber nur eine (Biege-)Zugfestigkeit, die um den Faktor 10 bis 20 darunter liegt. Für den Einsatz als biegebeanspruchte Bauteile ist daher, wie bei Stahlbeton, eine Bewehrung in den Aerogelbetonbauteilen anzuordnen, die die planmäßig auftretenden Zugkräfte aus Biegung oder zentrischem Zug aufnimmt.

Die Schwinddehnung des erfindungsgemäßen Bauteils liegt vorzugsweise in einem Bereich von 0,1 bis 5 Promille, insbesondere 0,3 bis 3 Promille. Es wird im vorliegenden Fall von Gesamt-Schwinddehnung gesprochen, die auch das Frühschwinden (plastisches Schwinden), das autogene Schwinden und das Trocknungsschwinden umfasst. Im Stand der Technik sind zwar Aerogelbetone bekannt, , für die auch eine recht geringe Schwinddehnung aufgeführt wird. Hierbei wurde allerdings nur das Trocknungsschwinden betrachtet.

### Bewehrung

Die Bewehrung kann metallisch und/oder nichtmetallisch sein. Das Material der Bewehrung kann anorganisch und/oder organisch sein. Das Material kann beispielsweise Glas oder Kohlenstoff umfassen. So kann die Bewehrung beispielsweise Glas- oder Carbonfasern umfassen. Das Material der Bewehrung kann vorzugsweise glasfaserverstärkter Kunststoff oder Stahl sein.

Die Bewehrung ist in dem ausgehärteten Aerogelbeton vorzugsweise in einem Bereich von 0,1 bis 10 Vol.% enthalten.

Die Bewehrung kann stabförmige Elemente, Matten, Gitter, Fasern, Gewebe, Gelege oder Kombinationen davon umfassen.

### Aerogelgranulat

Das Aerogelgranulat weist vorzugsweise im Median eine Korngröße in einem Bereich von 0,01 bis 4 mm, besonders bevorzugt in einem Bereich von 1 bis 4 mm auf. Die Korngröße kann durch Sieben bestimmt werden. Das Aerogelgranulat ist vorzugsweise ein Silica-Aerogelgranulat.

Der Gehalt an Aerogelgranulat in der Aerogelbetonmischung und/oder dem ausgehärteten Aerogelbeton liegt vorzugsweise in einem Bereich von 30 bis 80 Vol.%.

### Bindemittel

Vorzugsweise wird das Bindemittel in der Aerogelbetonmischung und/oder dem ausgehärteten Aerogelbeton in einer Menge in einem Bereich von 400 bis 650 kg/m³ eingesetzt. Üblicherweise liegt die Menge an Bindemittel wie Portlandzement bei über 800 bis 900 kg/m³. Durch die deutlich geringere Menge entsteht bei der Aushärtung wesentlich weniger Wärme, so dass es auch zu weniger thermisch bedingten Spannungen im Material kommt und so weniger Defekte wie Risse entstehen können.

Das Bindemittel ist vorzugsweise ein anorganisches Bindemittel. Das Bindemittel ist vorzugsweise ein hydraulisches Bindemittel. Besonders bevorzugt ist das Bindemittel ein Zement wie beispielsweise ein Portlandzement.

Das Bindemittel weist vorzugsweise im Median eine Korngröße in einem Bereich von 5 bis 100 µm auf.

Das Bindemittel weist vorzugsweise eine Dichte in einem Bereich von 2,8 bis 4 kg/dm³ auf.

### Silica

Silica (Kieselgel) kann beispielsweise eine (beispielsweise wässrige) Suspension oder ein Pulver beziehungsweise Staub sein. Bevorzugt ist der Einsatz einer Suspension.

Der Gehalt an Silica (Trockengewicht ohne Wasser) in der Aerogelbetonmischung und/oder dem ausgehärteten Aerogelbeton liegt vorzugsweise in einem Bereich von 50 bis 100 kg/m³.

Kieselgel-Suspensionen im Sinne der vorliegenden Erfindung sind im Handel erhältlich und umfassen insbesondere ein sehr reaktives, amorphes Mikrosilica-Wasser-Gemisch mit hoher spezifischer Oberfläche, beispielsweise MC Centrilit Fume SX: Blaine-Wert 20000, das heißt 4 bis 5 Mal größer als Zement / Bindemittel.

Der Feststoffgehalt einer Suspension kann üblicherweise 50 M. -% betragen. Die Silicasuspension kann über einen Wirkstoffgehalt von 50 M.-% verfügen, wobei 50 M.-% aus Wasser bestehen kann.

### Fließmittel

Der Gehalt an Fließmittel (Trockengewicht, ohne Wasser beziehungsweise Lösungsmittel) in der Aerogelbetonmischung und/oder dem ausgehärteten Aerogelbeton liegt vorzugsweise in einem Bereich von 3 bis 15 kg/m³.

Fließmittel im Sinne der vorliegenden Erfindung sind im Handel erhältlich und umfassen insbesondere im Handel erhältliche Polycarboxylate, wie beispielsweise MC Powerflow 3100: Polycarboxylatether mit 30 M.-% Feststoffgehalt, hoher Ladungsdichte und kurzen Seitenketten.

### Stabilisierer

Der Gehalt an Stabilisierer in der Aerogelbetonmischung und/oder dem ausgehärteten Aerogelbeton liegt vorzugsweise in einem Bereich von 0,2 bis 6 kg/m³.

Stabilisierer im Sinne der vorliegenden Erfindung sind beispielsweise im Handel erhältlich und umfassen insbesondere im Handel erhältliche organische Polymere, beispielsweise MC Stabi 520, Wasser aufsaugende und Wasser einlagernde Cellulose.

### Zusatz- beziehungsweise Zementersatzstoffe

Vorzugsweise wird der Zusatz- beziehungsweise Zementersatzstoff in der Aerogelbetonmischung und/oder dem ausgehärteten Aerogelbeton in einer Menge in einem Bereich von 10 bis 400 kg/m³, besonders bevorzugt 20 bis 200 kg/m³, eingesetzt. Der Zusatz-beziehungsweise Zementersatzstoff ersetzt damit gegenüber den üblichen Aerogelbetonen einen Teil des Bindemittels. Dadurch fällt die thermische Reaktion bei der Aushärtung geringer aus, so dass dadurch auch geringere Spannungen im Beton und damit geringere Defekte wie Risse entstehen.

Der wenigstens eine Zusatz- beziehungsweise Zementersatzstoff kann ausgewählt sein aus inerten, puzzolanischen oder latent-hydraulischen Zusatzstoffen, beispielsweise Kalksteinmehl, Quarzmehl, calciniertem Ton, Metakaolin, Reishülsenasche, Ziegelmehl, Glasmehl, Flugasche, Hüttensandmehl und/oder Mischungen derselben.

Vorzugsweise ist der Zusatz- beziehungsweise Zementersatzstoff latent hydraulisch.

Die Dichte des Zusatz- beziehungsweise Zementersatzstoffes liegt vorzugsweise in einem Bereich von 2,1 bis 3,5 g/cm³, ganz besonders bevorzugt in einem Bereich von 2,4 bis 3 g/cm³.

Die Korngröße des Zusatz- beziehungsweise Zementersatzstoffes liegt vorzugsweise im Median in einem Bereich von 1 bis 100 µm, ganz besonders bevorzugt in einem Bereich von 3 bis 50 µm.

Der pH-Wert des Zusatz- beziehungsweise Zementersatzstoffes liegt vorzugsweise in einem Bereich von 10 bis 12.

Der Schmelzpunkt des Zusatz- beziehungsweise Zementersatzstoffes liegt vorzugsweise in einem Bereich von 1000 bis 3000 °C.

Die spezifische Oberfläche des Zusatz- beziehungsweise Zementersatzstoffes liegt vorzugsweise in einem Bereich von 2.500 bis 10.000 cm²/g.

Der Glasgehalt des Zusatz- beziehungsweise Zementersatzstoffes liegt vorzugsweise in einem Bereich von 40 bis 90 M.-%.

Besonders bevorzugt ist der wenigstens eine Zusatz- beziehungsweise Zementersatzstoff Kalksteinmehl, calcinierter Ton, Hüttensandmehl (beispielsweise gern. DIN EN 15167-1) oder Mischungen derselben.

### Faserabschnitte

Vorzugsweise sind die Faserabschnitte in der Aerogelbetonmischung und/oder dem ausgehärteten Aerogelbeton in einer Menge in einem Bereich von 1 bis 8 kg/m³ enthalten. Vorzugsweise sind die Faserabschnitte unabhängig davon in der Aerogelbetonmischung und/oder dem ausgehärteten Aerogelbeton in einer Menge in einem Bereich von 0,1 bis 2 Vol.-% enthalten.

Die Faserabschnitte weisen vorzugsweise im Median eine Länge in einem Bereich von 0,1 bis 20 mm, besonders bevorzugt in einem Bereich von 1 bis 6 mm, insbesondere in einem Bereich von 1 bis 3 mm auf. Längere Faserabschnitte haben den Nachteil, dass sie sich negativ auf die Verarbeitbarkeit und den Wasseranspruch auswirken können. Insbesondere bei derartigen Kurzfasern kann jedoch die Rissbildung bei bewehrtem Beton vermieden werden. Bei gleichzeitig vorteilhafter Verarbeitung.

Die Faserabschnitte weisen vorzugsweise im Median einen Faserdurchmesser im Bereich von 1 bis 30 µm, besonders bevorzugt in einem Bereich von 3 bis 10 µm, auf.

Die Faserabschnitte weisen vorzugsweise eine Festigkeit im Bereich von 3000 bis 6000 MPa auf.

Die Faserabschnitte weisen vorzugsweise einen E-Modul im Bereich von 200 bis 300 GPa auf.

Die Faserabschnitte sind vorzugsweise zumindest teilweise Kohlefaserabschnitte.

Die Faserabschnitte weisen vorzugsweise ein Schlichte auf. Die Schlichte ist vorzugsweise wasserlöslich. Die Schlichte kann beispielsweise wasserlösliche Polymere enthalten. Ohne die Schlichte kann es bei der Herstellung des erfindungsgemäßen Aerogels zu unerwünschter Agglomeration der Faserabschnitte kommen, so dass die Faserabschnitte dann nicht homogen im Aerogelbeton verteilt sind.

Das Gewichtsverhältnis an Zusatz- beziehungsweise Zementersatzstoff (insbesondere dann, wenn der Zusatz- beziehungsweise Zementersatzstoff Hüttensandmehl ist) zu Faserabschnitten liegt vorzugsweise in einem Bereich von 50:1 bis 10:1.

Das Gewichtsverhältnis an Zusatz- beziehungsweise Zementersatzstoff (insbesondere dann, wenn der Zusatz- beziehungsweise Zementersatzstoff Hüttensandmehl ist) zu Aerogelgranulat liegt vorzugsweise in einem Bereich von 15:1 bis 9:1.

### Ausführungsbeispiel

Es wurden Mörtelprismen mit den Abmessungen 160 mm x 40 mm x 40 mm nach DIN EN 196 mit der folgenden Mischungszusammensetzung hergestellt (jeweils in kg/m³):

| | |
|---|---|
| Portlandzement | 614,2 |
| Mikrosilica-Suspension | 199,6 |
| Faserabschnitte | 4,3 |
| Fließmittel | 27,2 |
| Zugabewasser | 115,4 |
| Stabilisierer | 3,8 |
| Hüttensandmehl | 153,5 |
| Aerogelgranulat | 44,6 |

Es kamen die folgenden Produkte zum Einsatz:
Portlandzement: Portlandzement CEM I 52, 5R (Milke Premium^{®} der Firma Heidelberg-Cement^{®} )
Microsilica-Suspension: Centrilit Fume SX^{®} der Firma MC Bauchemie^{®}
Aerogelgranulat: SiO₂-Aerogel (Aerogel Partikel P100^{®} der Firma Cabot^{®} )
Fließmittel: Hochleistungs-Fließmittel (MC-PowerFlow 3100^{®} der Firma MC Bauchemie^{®})
Stabilisierer: organischer Stabilisierer (Centrament Stabi 520^{®} der Firma MC Bauchemie^{®})
Hüttensandmehl: Holcim Hüttensandmehl
Faserabschnitte: Tenax^{®} Short Fibers (Faserlänge 3mm; Tejin Carbon Europe GmbH)

Zur Herstellung der Mörtelprismen wurden die trockenen Mischungsbestandteile, d.h. Zement, Faserabschnitte und das Aerogelgranulat für 60 s in einem Intensivmischer vorgemischt. Danach wurde eine Mischung aus 1/3 bis 1/4 des Zugabewassers mit dem Hochleistungsfließmittel hergestellt und der trockenen Vormischung hinzugegeben. Nach Zugabe des organischen Stabilisierers und einer Mischzeit von weiteren 60 s wurde eine Vormischung aus 1/4 des Zugabewassers und der Silicasuspension hinzugefügt. Nach erneutem Mischen für 60 s wurden die Dosierbehälter für das Silicasuspension-Wasser-Gemisch und das Fließmittel mit jeweils 50 Vol.-% des verbleibenden Zugabewassers befüllt und in die Mischung entleert. Nach abschließendem Mischen für 120 s wurde der Intensivmischer gestoppt und die fertige Mischung in die vorbereiteten Schalungen für die Mörtelprismen nach DIN EN 196 gefüllt. Nach 28 Tagen Lagerung im Wasserbad wurde an den Prüfkörpern die Druckfestigkeit und die Zugfestigkeit bestimmt.

Die Druckfestigkeit betrug 25,3 MPa. Der E-Modul betrug 9817 MPa. Die zentrische Zugfestigkeit betrug 1,26 MPa. Die Spaltzugfestigkeit betrug 1,69 MPa.

Anschließend wurden unter anderem auch Aerogelbetonbalken mit einer Länge von 220 cm, einer Breite von 12 cm und einer Höhe von 20 cm mit der gleichen Zusammensetzung und dem gleichen Verfahren in eine entsprechende Form gegossen, in der zuvor Bewehrung aus Betonstahl oder / und glasfaserverstärktem Kunststoff eingelegt waren. Anhand dieser Probekörper wurden das Schwindverhalten und die Tragfähigkeit geprüft.

Bei Aushärtung des erfindungsgemäßen bewehrten Aerogelbetons konnte keine materialbedingte Rissbildung und Vorschädigung festgestellt werden.

Es wurde auch ein Vergleichsversuch durchgeführt, bei dem das Hüttensandmehl durch Portlandzement ersetzt und die Faserabschnitte weggelassen wurden. Bei diesen Proben hat man deutliche Risse im ausgehärteten bewehrten Aerogelbeton beobachten können.

## Patentansprüche

1. Aerogelbetonmischung, enthaltend
a. 10 bis 85 kg/m³ Aerogelgranulat,
b. 100 bis 800 kg/m³ wenigstens eines anorganischen Bindemittels,
c. 10 bis 150 kg/m³ Silica bezogen auf den Feststoffgehalt,
d. 1 bis 45 kg/m³ wenigstens eines Fließmittels,
e. 0,2 bis 9 kg/m³ wenigstens eines Stabilisierers,
f. 10 bis 1200 kg/m³ wenigstens eines Zusatz-beziehungsweise Zementersatzstoffs, und
g. 0,5 bis 50 kg/m³ Faserabschnitte.

2. Aerogelbetonmischung gemäß Anspruch 1, **dadurch gekennzeichnet, dass** die Faserabschnitte eine Länge in einem Bereich von 0,1 bis 20 mm aufweisen.

3. Aerogelbetonmischung gemäß Anspruch 1 oder 2, **dadurch gekennzeichnet, dass** die Aerogelbetonmischung zusätzlich eine Bewehrung, insbesondere aus Stahl oder glasfaserverstärktem Kunststoff, aufweist.

4. Aerogelbetonmischung nach Anspruch 3, **dadurch gekennzeichnet, dass** die Fasern in einer Länge von ≤ 3 mm und mit einem geringen Fasergehalt von bis zu 0,5 Vol.-% vorliegen.

5. Verfahren zur Herstellung eines Aerogelbetons mit einer Aerogelbetonmischung nach einem der Ansprüche 1 bis 4, **dadurch gekennzeichnet, dass** man zunächst Bindemittel, Faserabschnitte, Aerogel und Zusatz- beziehungsweise Zementersatzstoff vermischt, dann ein Wasser-Fließmittel-Gemisch und den Stabilisierer hinzufügt, in einer Mischpause eine wässrige Silicasuspension, nach erneutem Mischen das verbleibende Wasser hinzugibt und weiter mischt, optional anschließend die Mischung mit einer Bewehrung versieht und dann aushärtet.

6. Ausgehärteter Aerogelbeton enthaltend
a. optional wenigstens eine Bewehrung,
b. 10 bis 85 kg/m³ Aerogelgranulat,
c. 100 bis 800 kg/m³ wenigstens eines anorganischen Bindemittels,
d. 10 bis 150 kg/m³ Silica bezogen auf den Feststoffgehalt,
e. 1 bis 45 kg/m³ wenigstens eines Fließmittels,
f. 10 bis 1200 kg/m³ wenigstens eines Zusatz-beziehungsweise Zementersatzstoffs, und
g. 0,5 bis 50 kg/m³ Faserabschnitte.

7. Ausgehärteter Aerogelbeton gemäß Anspruch 6, **dadurch gekennzeichnet, dass** die Faserabschnitte eine Länge in einem Bereich von 0,1 bis 20 mm aufweisen.

8. Ausgehärteter Aerogelbeton gemäß einem der Ansprüche 6 oder 7, **dadurch gekennzeichnet, dass** das Gewichtsverhältnis an Zusatz-beziehungsweise Zementersatzstoff zu Faserabschnitten in einem Bereich von 50:1 bis 10:1 liegt.

9. Ausgehärteter Aerogelbeton gemäß einem der Ansprüche 6 bis 8, **dadurch gekennzeichnet, dass** die Faserabschnitte im Median einen Faserdurchmesser im Bereich von 1 bis 30 µm aufweisen.

10. Ausgehärteter Aerogelbeton gemäß einem der Ansprüche 6 bis 9, **dadurch gekennzeichnet, dass** der Zusatz-beziehungsweise Zementersatzstoff ausgewählt ist aus der Gruppe Kalksteinmehl, Quarzmehl, calcinierter Ton, Metakaolin, Reishülsenasche, Ziegelmehl, Glasmehl, Flugasche, Hüttensandmehl und/oder Mischungen derselben.

11. Ausgehärteter Aerogelbeton gemäß einem der Ansprüche 6 bis 10, **dadurch gekennzeichnet, dass** dieser gemäß dem Verfahren gemäß Anspruch 4 erhältlich ist.

12. Bauelement aus einem ausgehärteten Aerogelbeton gemäß einem der Ansprüche 6 bis 11.
